# EUROPÄISCHE PATENTANMELDUNG

(11) **EP 0 833 425 A2**
(43) Veröffentlichungstag der Anmeldung: **01.04.1998**
(21) Anmeldenummer: 97115927.2
(22) Anmeldetag: 12.09.1997
(51) Int. Cl.: H02J 13/00

(54) **Kommunikationssystem für ein Leitungsnetz**

(30) Priorität: 30.09.1996 DE 19640223
(71) Anmelder: SIEMENS AKTIENGESELLSCHAFT, 80333 München (DE)
(72) Erfinder: Marttinenn, Tapio, Dr., 81379 München (DE); Korpi, Markku, Dipl.-Ing., 82319 Starnberg (DE)

(57) **Zusammenfassung**

Beschrieben wird ein Verfahren zum Betreiben eines Kommunikations- und/oder Steuerungssystems (10) über ein mit Steckdosen (12 bis 16) ausgestattetes Leitungsnetz, bei dem in mindestens einer Steckdose (12 bis 16) zum Liefern einer standardisierten Versorgungsspannung mindestens eine Übermittlungsleitung (22 bis 26) angeordnet ist, die über einen in die Steckdose (12 bis 16) gesteckten Stecker (56, 64, 88) mit einem Gerät (54, 62, 92) verbunden wird und auf der gerätespezifische Signale übermittelt werden. Die Übermittlung erfolgt gemäß einem von mindestens zwei wählbaren Übermittlungsprotokollen, wobei gemäß der Art des eingesteckten Geräts (54, 62, 92) eines der beiden Übermittlungsprotokolle ausgewählt wird.

## Beschreibung

Die Erfindung betrifft ein Verfahren zum Betreiben eines Kommunikations- und/oder Steuerungssystems über ein mit Steckdosen ausgestattetes Leitungsnetz, bei dem in mindestens einer Steckdose zum Liefern einer standardisierten Versorgungsspannung mindestens eine Übermittlungsleitung angeordnet ist, die über einen in die Steckdose gesteckten Stecker mit einem Gerät verbunden wird und auf der gerätespezifische Signale übermittelt werden.

Ein Verfahren zum Betreiben eines derartigen Steuerungssystems ist in der PCT-Anmeldung WO 89/12950 im Zusammenhang mit einer Thyristor-Steuerung dargestellt. Bei dem bekannten Verfahren werden über die Übermittlungsleitung Zündimpulse für einen Thyristor übermittelt, der wesentliches Teil einer Helligkeitssteuerung für eine Raumbeleuchtung ist. Das dabei verwendete Prinzip ist eine Phasenschnittsteuerung des Thyristors, bei der je nach Zeitpunkt eines jeweiligen Zündimpulses der Thyristor verschiedenartig angesteuert wird. Letztlich steuert also ein analoges Phasensignal den Thyristor, so daß das Übermittlungsprotokoll lediglich eine Übermittlung der Zündimpulse umfaßt. Je nach voreingestellter Phasenlage der Zündimpulse ergibt sich eine bestimmte Helligkeit der Beleuchtung.

Mit dem bekannten Steuerungssystem können Beleuchtungseinrichtungen in einem Gebäude angesteuert werden. Dies ist jedoch nur ein kleiner Teilbereich der gesamten Hausleittechnik. Zur Hausleittechnik gehören neben den Versorgungsspannungsleitungen und Leitungen für einfache Steuerungsaufgaben u.a. auch Telefonleitungen, Leitungen für Computernetze, Leitungen zum Übertragen von Radiodaten und Leitungen zum Übertragen von Fernsehdaten. Somit realisiert das bekannte Beleuchtungssteuerungssystem nur einen kleinen Teil der im Bereich der Hausleittechnik zu realisierenden Aufgaben.

Der Aufwand zum Installieren des bekannten Steuerungssytems und der genannten Leitungsnetze ist hoch. Insbesondere ist es üblich, für jedes dieser Netze ein eigenes Leitungsnetz in den Räumen des Gebäudes zu verlegen. Dadurch entstehen Materialkosten, Arbeitszeitkosten und im Fehlerfalle Reparaturkosten in jedem dieser Leitungsnetze.

Aufgabe der Erfindung ist es, ein einfaches Verfahren zum Betreiben eines Kommunikations- und/oder Steuerungssystems anzugeben, das den Bedienungsaufwand, den Materialaufwand, den Installationsaufwand und den Wartungsaufwand auf dem Gebiet der Hausleittechnik verringert.

Diese Aufgabe wird für das eingangs genannte Verfahren dadurch gelöst, daß die Übermittlung gemäß einem von mindestens zwei wählbaren Übermittlungsprotokollen erfolgt, wobei gemäß der Art des eingesteckten Geräts eines der beiden Übermittlungsprotokolle ausgewählt wird.

Die Erfindung geht von der Erkenntnis aus, daß die in jedem Gebäude bereits vorhandenen Steckdosen zum Betreiben eines Kommunikations- und/oder Steuerungssystems nutzbar sind. Das in jedem Land standardisierte Versorgungsspannungsnetz einschließlich standardisierter Steckdosen ist für den Aufbau eines Kommunikations- und/oder Steuerungssystems deshalb besonders geeignet, weil die Geräte, die zum Kommunikations- und/oder Steuerungssystem gehören, üblicherweise eine Versorgungsspannung benötigen. Außerdem sind die Versorgungsspannungsleitungen die Leitungen mit dem größten Materialeinsatz. Wird das vorhandene Versorgungsspannungsnetz auch beim Aufbau des Kommunikations- und/oder Steuerungssystems mit einbezogen, so kann der vollständige Aufbau zusätzlicher separater Netze vermieden werden. Es ergeben sich Synergieeffekte, die z.B. darin bestehen, daß Steckdosen und Stecker nur leicht modifiziert werden müssen und Spannungsversorgungskabel zu den Geräten neben der Versorgungsspannung auf in Versorgungsspannungskabeln enthaltenen Übermittlungsleitungen auch Steuerungs- oder Kommunikationssignale übermitteln. Das Verlegen zusätzlicher Kabel kann durch die Erfindung vermieden werden.

Bei der Erfindung wird die Übermittlung gemäß einem von mindestens zwei wählbaren Übermittlungsprotokollen durchgeführt. Diese Übermittlungsprotokolle können z.B. Protokolle zum Übertragen von digitalen Sprachsignalen beim Telefonieren, Protokolle zum Übermitteln digitaler Radiodaten, Protokolle zum Übermitteln digitaler Bilddaten, einfache analoge oder digitale Steuerungsprotokolle, einfache analoge Sensorprotokolle und/oder Protokolle zum Übermitteln digitaler Daten zwischen verschiedenen Datenverarbeitungsanlagen sein. Für jedes wählbare Übermittlungsprotokoll kann auf ein zusätzliches Leitungsnetz verzichtet werden. Somit führt die Erfindung dazu, daß das üblicherweise notwendige Versorgungsspannungsnetz das einzige Leitungsnetz in einem Gebäude ist. Es wird lediglich mit der Übermittlungsleitung zum Übermitteln der gerätespezifischen Signale kombiniert. Innerhalb der einzelnen Übermittlungsprotokolle können unterschiedliche Übermittlungsgeschwindigkeiten für das jeweilige Übermittlungsprotokoll festgelegt werden.

Bei der Erfindung wird das Übermittlungsprotokoll gemäß der Art des eingesteckten Geräts ausgewählt. Das bedeutet, daß eine Zuordnung zwischen im Kommunikations- und/oder Steuerungssystem betreibaren Geräten und wählbaren Übermittlungsprotokollen sowie gegebenenfalls von Übermittlungsgeschwindigkeiten erfolgt. Jeder Art von einsteckbaren Geräten ist ein bestimmtes Übermittlungsprotokoll zugeordnet.

In einem Ausführungsbeispiel der Erfindung ist die Übermittlungsleitung ein optisches Kabel, z.B. ein Glasfaserkabel.

Die Übermittlung der gerätespezifischen Signale auf dem optischen Kabel führt dazu, daß Störungen durch die unmittelbar angrenzend geführte Versorgungsspannung ausgeschlossen werden. Außerdem brauchen die nach länderspezifischen Normvorschriften vorgeschriebenen Abstände zwischen Versorgungsspannungsleitungen und galvanischen Signalleitungen bei einer optischen Übertragung nicht eingehalten zu werden.

In einem weiteren Ausführungsbeispiel der Erfindung wird geräteseitig ein Gerätkennzeichen erzeugt, das zumindest die Art des Geräts eindeutig kennzeichnet. Das Gerätkennzeichen wird über die Datenleitung übermittelt und anhand des Gerätkennzeichens wird anschließend die Art des eingesteckten Geräts bestimmt. Dieses Ausführungsbeispiel beruht auf der Überlegung, daß die Steckdosen des standardisierten Versorgungsspannungsnetzes ebenfalls standardisiert sind. Somit ist es unvermeidbar, daß Geräte unterschiedlichster Art in ein und diesselbe Steckdose mit Hilfe gleichartig aufgebauter Stecker gesteckt werden können. Um Beschädigungen von Geräten zu vermeiden und einen ordnungsgemäßen Betrieb der verschiedenen Gerätearten zu gewährleisten, müssen Maßnahmen getroffen werden, die eine Zuordnung eines eingesteckten Geräts zu einem der Übertragungsprotokolle gestatten. Bei dem Ausführungsbeispiel der Erfindung besteht diese Maßnahme darin, daß vom Gerät oder vom mit dem Gerät verbundenen Stecker ein Gerätkennzeichen erzeugt wird. Nach dem Einstecken des mit dem Gerät verbundenen Steckers in die Steckdose wird das Gerätkennzeichen über die Datenleitung übermittelt. In einer Steuereinheit kann bei der Erfindung anhand des Gerätkennzeichens die Art des eingesteckten Geräts bestimmt werden. Somit wird ohne aufwendige manuelle Programmiervorgänge ein Zuordnen eines Übermittlungsprotokolls zu einer Steckdose, und damit zu einem eingesteckten Gerät möglich. Wird auch das Gerätkennzeichen automatisch erzeugt, so beschränkt sich der manuelle Aufwand lediglich auf das Einstecken des Geräts mit Hilfe des Steckers.

Das Verfahren nach dem Ausführungsbeispiel der Erfindung führt auch dazu, daß die Steuereinheit entlastet wird, da die gerätespezifischen Signale nicht für bzw. von bestimmten Geräten adressiert werden müssen. Nachdem die Steuereinheit anhand des Gerätkennzeichens ermittelt hat, welche Art von Gerät mit der jeweiligen Datenleitung verbunden ist, werden nur die für dieses Gerät benötigten Signale auf der Datenleitung übermittelt, d.h. zum Gerät gesendet und/oder vom Gerät empfangen.

Wird das Gerätkennzeichen geräteseitig mehrmals hintereinander gesendet, so kann die Steuereinheit feststellen, wann der Stecker des Geräts aus der Steckdose entfernt wird, da in diesem Fall das Gerätkennzeichen nicht mehr empfangen werden kann. Durch diese Maßnahme ist es möglich, daß die Steuereinheit die gerätespezifischen Daten wirklich nur über eine Übermittlungsleitung übermittelt, mit der ein Gerät verbunden ist. Außerdem erwartet die Steuereinheit auch nur Signale auf einer Übermittlungsleitung die tatsächlich mit einem Gerät verbunden ist. Somit können die in der Steuereinheit vorhandenen Mittel effektiv genutzt werden, z.B. wird keine Zeit für das überflüssige Senden von Signalen oder für das überflüssige Erwarten von Signalen verschwendet.

Das Senden des Gerätekennzeichens kann auf Anforderung der Steuereinheit erfolgen oder aber nach einer vorgegebenen Zeit wiederholt werden. Im ersten Fall ist der geräteseitige Aüfwand geringer, dafür muß aber in der Steuereinheit ein Mehraufwand zum Senden der Anforderung betrieben werden. Im zweiten Fall ist geräteseitig ein Timer vorzusehen, die Steuereinheit ist jedoch entlastet.

Zweckmäßigerweise wird das Gerätkennzeichen nur dann gesendet, wenn momentan keine Signale auf der Übermittlungsleitung übermittelt werden. Durch diese Maßnahme werden Unterbrechungen der Signalübermittlung durch das Senden des Gerätkennzeichens verhindert. Die Übermittlung des Gerätkennzeichens beeinflußt damit nicht die Übermittlungsgeschwindigkeit der Signale. Außerdem kann die Steuereinheit im Fall der Übermittlung von Signalen vom Gerät zur Steuereinheit anhand einer unterbrochenen Signalübermittlung bereits feststellen, daß das Gerät nicht mehr mit der Datenleitung verbunden ist.

In einem Ausführungsbeispiel der Erfindung wird das eingesteckte Gerät anhand einer im Gerätkennezeichen enthaltenen übermittelten Identifikation ermittelt, welche das Gerät nach Art eines Identifikationscodes eindeutig kennzeichnet. Der Identifikationscode kann z.B. einen Namen oder eine Nummer enthalten. Durch diese Maßnahme wird erreicht, daß in der Steuereinheit bzw. im Empfänger der Gerätkennzeichen nicht nur Informationen bezüglich der Art eines eingesteckten Geräts verfügbar sind, sondern daß auch innerhalb einer Geräteart verschiedene Geräte anhand der Identifikation unterschieden werden können. Sind diese Identifkationen z.B. verschiedenen Nutzern zugeordnet, so kann die Steuereinheit abhängig vom jeweiligen Nutzer Kommunikations- und/oder Steuerungsprozesse zulassen oder verbieten.

Die Erfindung betrifft in einem zweiten Aspekt ein Kommunikations- und/oder Steuerungssystem mit den Merkmalen des Patentanspruchs 10, welches insbesondere zum Durchführen des oben beschriebenen Verfahrens geeignet ist. Die oben genannten vorteilhaften Wirkungen übertragen sich auch auf das Kommunikations- und/oder Steuerungssystem nach dem zweiten Aspekt der Erfindung.

In einem Ausführungsbeispiel des zweiten Aspekts der Erfindung enthält das Kommunikations- und/oder Steuerungssystem eine Eingabeeinheit mit mindestens zwei Schwellwerteinheiten. Die Eingabeeinheit ist so realisiert, daß anhand der Schwellwerte erkannt wird, auf welcher Datenleitung ein Gerät eingesteckt wurde. Zum Auswerten der Signale der Schwellwerteinheit wird mit Hilfe einer Multiplexeradressiereinheit nur die betreffende Datenleitung mit der Steuereinheit verbunden.

Somit ist eine Behandlungslogik für die Schwellwerte nur einmal notwendig. Damit ergibt sich eine Eingabeeinheit, die einfach aufgebaut ist.

Zweckmäßigerweise wird das Gerätkennzeichen in mehrere Teile aufgeteilt: So kann in einem Typteil die Art des eingesteckten Geräts hinterlegt werden, in einem Wartungsteil können Informationen über den Zustand des eingesteckten Geräts verschlüsselt werden, und in einem Teil zur Fehlerermittlung können z.B. Prüfsummen gespeichert werden, anhand derer sich die ordnungsgemäße Übermittlung des Gerätkennzeichens auf der Übermittlungsleitung überprüfen läßt.

Durch ein Statusbit im Gerätkennzeichen kann angegeben werden, ob das Gerätkennzeichen auch einen Identifikationsteil enthält, welcher das eingesteckte Gerät nach Art eines Namens eindeutig kennzeichnet. Durch das Statusbit kann die Länge des Gerätkennzeichens an das jeweils eingesteckte Gerät angepaßt werden. Dadurch verringert sich bei kürzerem Gerätkennzeichen der Aufwand zum Erzeugen des Gerätkennzeichens und der Aufwand zum Auswerten des Gerätkennzeichens.

Ein dritter Aspekt der Erfindung betrifft einen Geräteadapter für das Kommunikations- und/oder Steuerungssystem mit den Merkmalen des Patentanspruchs 21. Durch den Adapter entfällt ein Eingriff in das Gerät, da das Gerätkennzeichen im Adapter erzeugt wird. In einem Ausführungsbeispiel des dritten Aspekts der Erfindung wird das Gerätkennzeichen mindestens einmal selbsttätig beim Einstecken des Steckers des Adapters in die Steckdose erzeugt, so daß außer dem Einstecken des Steckers keine manuelle Tätigkeit erforderlich ist.

Im folgenden wird die Erfindung anhand von Ausführungsbeispielen erläutert. Dabei zeigen:
- Fig. 1: ein Kommunikations- und Steuerungssystem für ein mit Steckdosen ausgestattetes Leitungsnetz,
- Fig. 2: ein Blockschaltbild der Eingabeeinheit einer Raum-Steuereinheit, und
- Fig. 3: die Bestandteile eines Gerätkennzeichens.

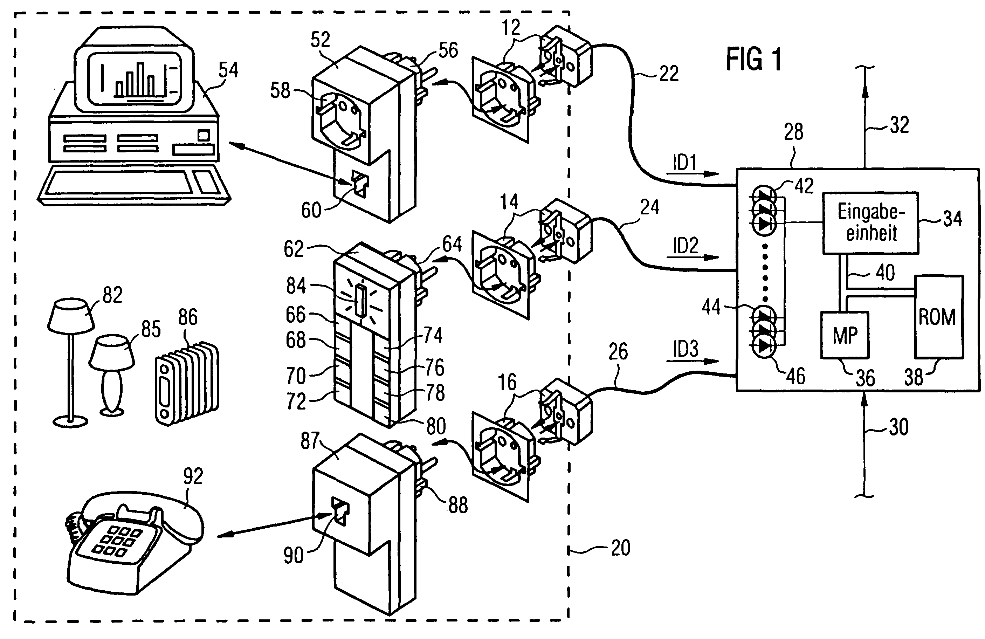

Fig. 1 zeigt ein Kommunikations- und Steuerungssystem 10 für ein mit Steckdosen 12 bis 16 ausgestattetes Leitungsnetz (nicht dargestellt) zum Liefern einer standardisierten Versorgungsspannung, z.B. 220V. Die Steckdosen 12 bis 16 befinden sich in den Wänden eines Raums 20 in einem Gebäude und sind über Glasfaserkabel 22, 24 bzw. 26 mit einer Raum-Steuereinheit 28 verbunden. Die Raum-Steuereinheit 28 ist über zwei Leitungen 30 und 32 mit anderen nicht dargestellten Raum-Steuereinheiten für andere Räume verbunden. Die Raum-Steuereinheiten einer Etage sind vorzugsweise ringförmig miteinander verbunden. In jedem Ring gibt es eine Zentral-Steuereinheit für die jeweilige Etage. Durch Verbinden von Zentral-Steuereinheiten mehrerer Etagen entsteht ein Kommunikations- und Steuerungssystem für das gesamte Gebäude, bei dem das vorhandene Versorgungsspannungsnetz genutzt wird.

Die Glasfaserkabel 22 bis 26 sind über eine Eingabeeinheit 34 mit der Raum-Steuereinheit 28 verbunden. Das Glasfaserkabel 22 ist mit der Eingabeeinheit 34 über eine Fotodiode 42 verbunden. Das Glasfaserkabel 24 bzw. 26 ist mit der Eingabeeinheit 34 über eine Fotodiode 44 bzw. 46 verbunden. Die Fotodioden 42 bis 46 können optische Signale von der Raum-Steuereinheit 28 aus senden und in einer zweiten Betriebsart optische Signale von den Glasfaserkabeln 22, 24 bzw. 26 empfangen.

Die Raum-Steuereinheit 28 enthält weiterhin einen Mikroprozessor 36 und einen Speicher 38, die beide mit einem Bussystem 40 aus Daten- und Steuerleitungen verbunden sind. Das Bussystem 40 ist auch mit der Eingabeeinheit 34 verbunden. Der Mikroprozessor 36 wertet z.B. die Ausgangssignale der Eingabeeinheit 34 aus und veranlaßt nach einem vorgegebenen Steuerprogramm vorgegebene Steuerprozesse. Der Mikroprozessor vermittelt weiterhin Daten zwischen der Leitung 30 und den Glasfaserkabeln 22, 24 bzw. 26 sowie in umgekehrter Richtung von den Glasfaserkabeln 22, 24 bzw. 26 zur Leitung 32.

Im Ausführungsbeispiel gemäß Fig. 1 wird in die Steckdose 12 ein Adapter 52 gesteckt, der den Anschluß einer Datenverarbeitungsanlage 54 an das Kommunikations- und Steuerungssystem 10 ermöglicht. Der Adapter 52 wird über einen Stecker 56 in die Steckdose 12 gesteckt. Im Adapter 52 befindet sich eine Steckdose 58 in die ein Netzstecker (nicht dargestellt) der Datenverarbeitungsanlage 54 gesteckt wird. Außerdem befindet sich am Adapter 52 eine Westernbuchse 60 zum Anschließen eines Modems mit dem digitale Daten von der Datenverarbeitungsanlage 54 und/oder zu dieser hin übermittelt werden.

In die Steckdose 14 wird eine Steuerungskonsole 62 mit einem Stecker 64 gesteckt. Die Steuerungskonsole 62 enthält Auswahltaster 66 bis 80. Der Auswahltaster 66 ist einer ersten Lampe 82 zugeordnet, die an eine Steckdose des Raums 20 angeschlossen ist. Wird der Taster 66 betätigt, so kann über einen Drehschalter 84 die Helligkeit für die Lampe 82 vorgegeben werden. Auf gleiche Weise kann mit Hilfe des Auswahltasters 68 die Helligkeit für eine weitere Lampe 85 im Raum 20 vorgegeben werden. Der Auswahltaster 70 gestattet die Vorgabe eines Temperaturwertes über dem Drehschalter 84 für eine Heizung 86, die den Raum 20 beheizt. Die anderen Auswahltaster 72 bis 80 können mit weiteren Funktionen belegt werden.

In die Steckdose 16 wird ein Adapter 87 mit einem Stecker 88 gesteckt. Der Adapter 86 hat eine Westernbuchse 90 zum Anschließen eines Telefonapparates 92.

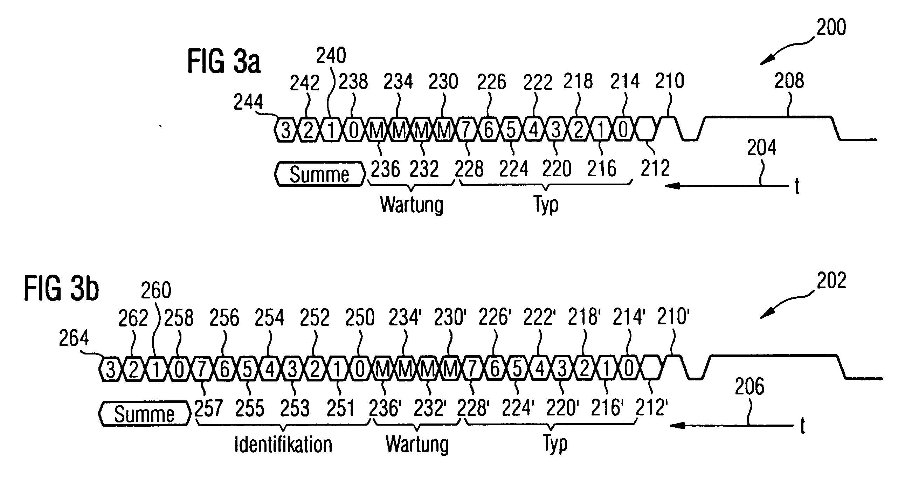

Von den Adaptern 52, 87 und der Steuerungskonsole 62 werden Gerätkennzeichen ID1 bis ID3 erzeugt. Das Gerätkennzeichen ID1 wird vom Adapter 52, das Gerätkennzeichen ID2 von der Steuerungskonsole 62 und das Gerätkennzeichen ID3 vom Adapter 87 erzeugt. Das Gerätkennzeichen ID1, ID2 bzw. ID3 wird über das Glasfaserkabel 22, 24 bzw. 26 gemäß einem Taktsignal übermittelt, das im Adapter 52, in der Steuerungskonsole 62 bzw. im Adapter 87 erzeugt wird. Die Gerätkennzeichen ID1 bis ID3 sind gleichartig aufgebaut. Ihr Aufbau wird anhand der Fig. 3 weiter unten erläutert.

Durch die Gerätkennzeichen ID1, ID2 und ID3 ist es der Steuereinheit 28 möglich, für die angeschlossenen Geräte, d.h. für die Datenverarbeitungsanlage 54, die Steuerungskonsole 62 und den Telefonapparat 92 zugeordnete Übertragungsprotokolle und Übertragungsgeschwindigkeiten auszuwählen, nach denen Signale auf den Glasfaserkabeln 22 bis 26 zum jeweiligen Gerät von der Steuereinheit 28 bzw. vom jeweiligen Gerät zur Steuereinheit 28 übermittelt werden. Durch das wiederholte Übermitteln der Gerätkennzeichen ID1 bis ID3 über die Glasfaserkabel 22 bis 26 ist es in der Steuereinheit 28 möglich, das Entfernen des Adapters 52, der Steuerungskonsole 62 oder des Adapters 86 zu registrieren.

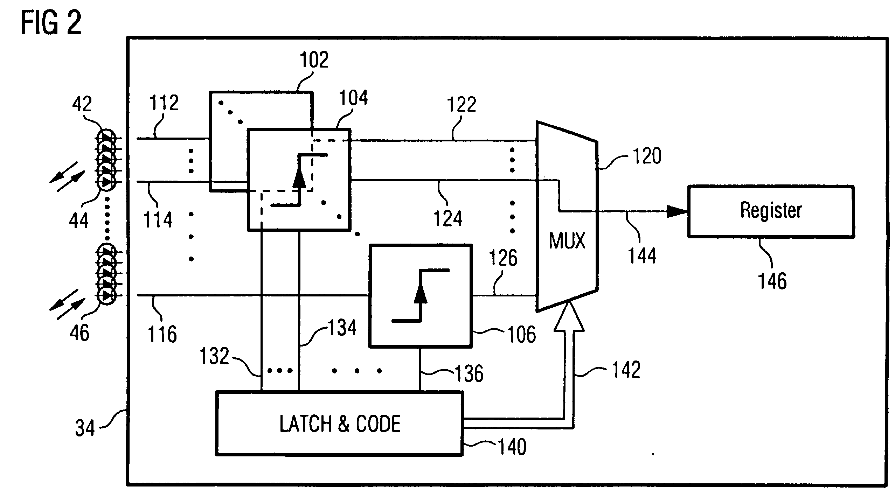

Fig. 2 zeigt ein Blockschaltbild der Eingabeeinheit 34, welche 32 Schwellwerteinheiten enthält, von denen in der Fig. 2 die Schwellwerteinheiten 102, 104 und 106 dargestellt sind.

Die Schwellwerteinheit 102 ist eingangsseitig über eine Leitung 112 mit der Fotodiode 42 verbunden. Die Schweliwerteinheit 104 bzw. 106 ist eingangsseitig über eine Leitung 114 bzw. 116 mit der Fotodiode 44 bzw. 46 verbunden.

Der Eingang der Schwellwerteinheit 102 bzw. die Leitung 112 ist mit dem ersten Eingang eines Multiplexers 120 über eine Leitung 122 verbunden. Der Eingang der Schwellwerteinheit 104 bzw. 106 ist über eine Datenleitung 124 bzw. 126 mit einem zweiten Eingang bzw. einem dritten Eingang des Multiplexers 120 verbunden.

Die Schwellwerteinheiten 102 bis 106 detektieren Spannungsschwankungen auf der Leitung 112, 114 bzw. 116. Diese Spannungsschwankungen resultieren aus einem veränderten Diodenstrom der Fotodiode 42, 44 bzw. 46 beim Empfangen von optischen Signalen über die Glasfaserkabel 22, 24 bzw. 26. Tritt eine Schwellwertüberschreitung in der Schwellwerteinheit 102 auf, so wird auf einer Signalleitung 132 am Ausgang der Schwellwerteinheit 102 ein Spannungswert von etwa 5V erzeugt. Tritt dagegen eine Schwellwertüberschreitung in der Schwellwerteinheit 104 bzw. 106 auf, so wird ein Spannungswert von 5V auf einer Signalleitung 134 bzw. 136 erzeugt. Die Signalleitungen 132 bis 136 sind mit Eingängen einer Codiereinheit 140 verbunden, welche jedem ihrer Eingänge einen Adreßcode zuordnet, der am Ausgang der Codiereinheit 140 ausgegeben wird. Mit dem Ausgang der Codiereinheit 140 sind Adreßleitungen 142 verbunden, die den Adreßcode von der Codiereinheit 140 zu Selektionseingängen des Multiplexers 120 übertragen. Im Multiplexer 120 wird abhängig vom Adreßcode auf den Adreßleitungen 142 eine der Leitungen 122, 124, 126 mit dem Ausgang des Multiplexers verbunden. Am Ausgang des Multiplexers ist eine Leitung 144 angeschlossen, die mit einem Register 146 verbunden ist. Das Register 146 enthält eine zusätzliche Logik zum Entfernen von Präambeln (vgl. Fig. 3, 208, 208') zur Synchronisation in den Gerätkennzeichen ID1 bis ID3. Außerdem fügt die zusätzliche Logik eine Nummer für die jeweilige Steckdose 12 bis 16, über die das jeweilige Gerätkennzeichen ID1 bis ID3 übermittelt wurde, an das Gerätkennzeichen ID1 bis ID3 im Register 146 an. Das Register 146 ist in Subregister unterteilt, in denen die anhand der Fig. 3 erläuterten Bestandteile der Gerätkennzeichen ID1 bis ID3 enthalten sind. Ist die Gruppierung im Register 146 abgeschlossen, so wird durch die Eingabeeinheit 34 ein Interruptsignal an den Mikroprozessor 36 gesendet, der anschließend die Bearbeitung des Gerätkennzeichens ID1 bis ID3 im Register 146 übernimmt.

Die Adreßcodeerzeugung in der Codiereinheit 140 erfolgt so, daß z.B. beim Überschreiten des Schwellwertes in der Schwellwerteinheit 104 wie in Fig. 2 dargestellt die Leitung 124 mit der Leitung 144 am Ausgang des Multiplexers 120 verbunden wird. Beim Auftreten einer Schwellwertüberschreitung in der Schwellwerteinheit 102 bzw. 106 wird die Leitung 122 bzw. 126 mit der Leitung 144 verbunden. Somit kann das Gerätkennzeichen ID1, ID2 bzw. ID3 von der Fotodiode 42, 44 bzw. 46 über die Leitungen 112, 114 bzw. 116; die Leitung 122, 124 bzw. 126 den Multiplexer 120, sowie die Leitung 144 zum Register 146 übertragen werden, wo es gespeichert wird. Konflikte zwischen verschiedenen Gerätkennzeichen ID1 bis ID3 werden dadurch vermieden, daß in der Codiereinheit 140 ein Datenpuffer (sogenanntes Latch) vorhanden ist, der nur zu bestimmten Zeiten aktualisiert wird. Wird auf einer der Signalleitungen 132 bis 136 ein Spannungswert von 5V registriert, so erfolgt eine Aktualisierung des Puffers erst nach einer Zeit, die zum ordnungsgemäßen Beschreiben und Lesen des Registers 146 erforderlich ist.

Außerdem werden Schwellwertüberschreitungen nur dann registriert, wenn nach dem Einstecken der Stecker 56, 64 bzw. 88 auf der jeweiligen Leitung 112, 114 bzw. 116 noch kein Gerätkennzeichen ID1, ID2 bzw. ID3 ordnungsgemäß bis zum Register 146 übermittelt wurde.

Die Funktion der Eingabeeinheit 34 ist nicht zeitkritisch, da in der Regel nur einer der Stecker 56, 64 bzw. 88 zu einem bestimmten Zeitpunkt eingesteckt wird. Selbst ein gleichzeitiges Einstecken mehrerer der Stecker 56, 64 bzw. 88 ist unkritisch, da zuvor eingesteckte Stecker nach wenigen Millisekunden ihr Gerätkennzeichen im Register 146 abgelegt haben. Für einen Nutzer des jeweiligen anderen Geräts ist eine derartige Verzögerung unwesentlich.

Fig. 3 zeigt die Bestandteile eines der Gerätkennzeichen ID1 bis ID3. In einem Teil a ist ein kurzes Gerätkennzeichen 200 dargestellt, und in einem Teil b der Fig. 3 ist ein langes Gerätkennzeichen 202 dargestellt. Ein Pfeil 204 bzw. 206 symbolisiert die Zeitachse, die in den Teilen a und b der Fig. 3 jeweils von rechts nach links verläuft, wobei spätere Zeitpunkte weiter links stehen als frühere Zeitpunkte.

Das kurze Gerätkennzeichen 200 enthält mehrere Bits, die eine Präambel 208 bilden, die zur Synchronisation beim Speichern des Gerätkennzeichens 200 im Register 146 (vgl. Fig. 2) verwendet wird. Nach der Präambel 208 wird durch ein Startbit 210 der Beginn der Nutzinformation des Gerätkennzeichens 200 angezeigt. Nach dem Startbit 210 folgt ein Flag 212, welches nach Art einer Flagge angibt, ob es sich um ein kurzes Gerätkennzeichen 200 oder um ein langes Gerätkennzeichen 202 handelt. Im Fall des kurzen Gerätkennzeichens 200 hat das Flag 212 den Wert "0".

Nach dem Flag 212 folgen acht Typbits 214 bis 228, in denen die Art des Geräts verschlusselt ist. Jedem Gerätetyp ist genau eine der möglichen Belegungen der Typbits 214 bis 228 zugewiesen. Der Datenverarbeitungsanlage 54 (vgl. Fig. 1) ist z.B. die binäre Bitfolge "0000100" zugewiesen.

Nach dem Typbit 228 folgen vier Wartungsbits 230 bis 236, deren konkrete Belegung den Zustand des Geräts angeben, welches das kurze Gerätkennzeichen 200 erzeugt hat. Als Zustand zählt z.B. die momentane Betriebsbereitschaft.

Am Ende des kurzen Gerätkennzeichens 200 befinden sich vier Prüfsummenbits 238 bis 244, die eine Prüfsumme über die Bits 210 bis 236 enthalten. Anhand der Prüfsumme der Prüfsummenbits 238 bis 244 kann festgestellt werden, ob bei der Übermittlung des Gerätkennzeichens 200 Bits 210 bis 236 ihren Wert verändert haben. In diesem Fall liegt ein Fehler vor, so daß die Übermittlung des Gerätkennzeichens 200 wiederholt werden muß.

Das im Teil b der Fig. 3 dargestellte lange Gerätkennzeichen 202 hat in einem ersten Teil den gleichen Aufbau wie das kurze Gerätkennzeichen 200. Demzufolge brauchen die bereits erläuterten Bezugszeichen nicht nochmals erläutert werden. Bereits erläuterte Bezugszeichen sind im Teil b der Fig. 3 durch einen hochgestellten Strich gekennzeichnet. Das Statusbit 212' hat im Gerätkennzeichen 202 den Wert "1", der auf ein langes Gerätkennzeichen 202 hinweist.

Im Gerätkennzeichen 202 folgen auf das letzte Wartungsbit 236' acht Identifikationsbits 250 bis 257, mit denen das zum Gerätkennzeichen 200 gehörende Gerät eindeutig identifiziert werden kann. Nach dem letzten Identifikationsbit 257 folgen vier Prüfsummenbits 258 bis 262, die eine Prüfsumme über die Bits 210' bis 236' sowie die Bits 250 bis 257 enthält. Anhand der Prüfsumme in den Prüfsummenbits 258 bis 262 können Fehler bei der Übertragung des Gerätkennzeichens 202 erkannt werden.

In dem Ausführungsbeispiel nach den Fig. 1 bis 3 werden die Gerätkennzeichen ID1 bis ID3 alle zehn Millisekunden über die Glasfaserkabel 22, 24 bzw. 26 übermittelt. Die Raum-Steuereinheit 28 legt für jedes eingesteckte Gerät ein Statusregister an, in dem die Informationen des zum jeweiligen Gerät gehörenden Gerätkennzeichens ID1 bis ID3 enthalten sind. Außerdem sind in den Statusregistern Informationen über die Steckdosen 12 bis 16 vorhanden. An das jeweilige Gerätkennzeichen wird eine Steckdosennummer angefügt, die eine Identifikation der Steckdosen 12 bis 16 gestattet.

Die Gerätkennzeichen ID1 bis ID3 werden alle mit der gleichen Übertragungsgeschwindigkeit, nach einem einheitlichen Übertragungsprotokoll übertragen, welches als Voreinstellung auf nicht benutzten Glasfaserkabeln 22 bis 26 gewählt wird. Während des Betriebs eines eingesteckten Geräts kann ein anderes Übermittlungsprotokoll gewählt werden. Wird der zu dem Gerät gehörende Adapter aus einer der Steckdosen 12 bis 16 entfernt, so wird durch die Raum-Steuereinheit 28 wieder das Übertragungsprotokoll für die Gerätkennzeichen ID1 bis ID3 ausgewählt.

Bei der Registrierung wiederholt gesendeter Gerätkennzeichen ID1 bis ID3 wird eine ähnliche Schaltung verwendet, wie die in der Fig. 2 dargestellte. Innerhalb eines größeren Zeitintervalls von einer Sekunde muß jedes Gerät mindestens einmal sein Gerätkennzeichen ID1 bis ID3 in ein dem Register 146 entsprechendes Register übermittelt haben. Ist dies nicht der Fall, so wird das Statusregister in der Steuereinheit 28, weiches diesem Gerät zugeordnet ist, gelöscht. Das jeweilige Glasfaserkabel 22 bis 26 gilt als unbenutzt, bis ein erneutes Einstecken eines Geräts in die zugeordneten Steckdosen 12, 14 bzw. 16 erfolgt.

## Patentansprüche

1. Verfahren zum Betreiben eines Kommunikations- und/oder Steuerungssystems (10) über ein mit Steckdosen (12 bis 16) ausgestattetes Leitungsnetz,
bei dem in mindestens einer Steckdose (12 bis 16) zum Liefern einer standardisierten Versorgungsspannung mindestens eine Übermittlungsleitung (22 bis 26) angeordnet ist, die über einen in die Steckdose (12 bis 16) gesteckten Stecker (56, 64, 88) mit einem Gerät (54, 62, 92) verbunden wird und auf der gerätespezifische Signale übermittelt werden,
dadurch **gekennzeichnet**, daß die Übermittlung gemäß einem von mindestens zwei wählbaren Übermittlungsprotokollen erfolgt,
wobei gemäß der Art des eingesteckten Geräts (54, 62, 92) eines der beiden Übermittlungsprotokolle ausgewählt wird.

2. Verfahren nach Anspruch 1, dadurch **gekennzeichnet**, daß die Signale digitale Daten enthalten.

3. Verfahren nach Anspruch 1 oder 2, dadurch **gekennzeichnet**, daß geräteseitig ein Gerätkennzeichen (ID1 bis ID3, 200, 202) erzeugt wird, das zumindest die Art des Geräts (54, 62, 92) eindeutig kennzeichnet,
daß das Gerätkennzeichen (ID1 bis ID3, 200, 202) über die Datenleitung (22 bis 26) übermittelt wird,
und daß anhand des Gerätkennzeichens (ID1 bis ID3, 200, 202) die Art des eingesteckten Geräts (54, 62, 92) bestimmt wird.

4. Verfahren nach einem der vorhergehenden Ansprüche, dadurch **gekennzeichnet**, daß das Gerätkennzeichen (ID1 bis ID3, 200, 202) automatisch erzeugt wird.

5. Verfahren nach einem der vorhergehenden Ansprüche, dadurch **gekennzeichnet**, daß das Gerätkennzeichen (ID1 bis ID3, 200, 202) mehrmals hintereinander übermittelt wird.

6. Verfahren nach Anspruch 5, dadurch **gekennzeichnet**, daß das Gerätkennzeichen (ID1 bis ID3, 200, 202) auf Anforderung einer Steuereinheit (28) zu dieser gesendet wird.

7. Verfahren nach Anspruch 5 oder 6, dadurch **gekennzeichnet**, daß das Übermitteln des Gerätkennzeichens (ID1 bis ID3, 200, 202) nach einer vorgegebenen Zeit wiederholt wird.

8. Verfahren nach einem der vorhergehenden Ansprüche, dadurch **gekennzeichnet**, daß das Gerätkennzeichen (ID1 bis ID3, 200, 202) nur dann übermittelt wird, wenn momentan keine Signale auf der Übermittlungsleitung (22 bis 26) übermittelt werden.

9. Verfahren nach einem der vorhergehenden Ansprüche, dadurch **gekennzeichnet**, daß das Gerät (54, 62, 92) anhand einer im Gerätkennzeichen (ID1 bis ID3, 200, 202) enthaltenen Identifikation (250 bis 257) ermittelt wird, die das Gerät (54, 62, 92) nach Art eines Identifikationscodes eindeutig kennzeichnet.

10. Kommunikations- und/oder Steuerungssystem (10) für ein mit Steckdosen (12 bis 16) ausgestattetes Leitungsnetz,
mit mindestens einer Steckdose (12 bis 16) an der eine Versorgungsspannungsleitung mit standardisierter Versorgungsspannung und ein Anschluß einer Übermittlungsleitung (22 bis 26) zum Übermitteln gerätespezifischer Signale angeordnet sind,
mit einer Steuereinheit (28) an einem anderen Anschluß der Übermittlungsleitung (22 bis 26) zum Senden der Signale an und/oder zum Empfangen der Signale von einem Gerät (54, 62, 92), welches über einen Stecker (56, 64, 88) mit der Steckdose (12 bis 16) verbunden ist,
**gekennzeichnet** durch eine Auswähleinheit (36, 38) zum Auswählen eines von mindestens zwei Übermittlungsprotokollen für die Übermittlung der Signale gemäß der Art des eingesteckten Geräts (54, 62, 92).

11. Kommunikations- und/oder Steuerungssystem (10) nach Anspruch 10, dadurch **gekennzeichnet**, daß die Auswahleinheit (36, 38) das Übermittlungsprotokoll abhängig von einem Gerätkennzeichen (ID1 bis ID3, 200, 202) auswählt, das geräteseitig erzeugt wird und das zumindest die Art des Geräts (54, 62, 92) eindeutig kennzeichnet.

12. Kommunikations- und/oder Steuerungssystem (10) nach Anspruch 10 oder 11, **gekennzeichnet** durch eine Eingabeeinheit (34) mit mindestens zwei Schwellwerteinheiten (102, 104),
wobei die erste Schwellwerteinheit (102) eingangsseitig mit der Übermittlungsleitung (22) zu einer ersten Steckdose (12) und die zweite Schwellwertschaltung (104) eingangsseitig mit der Übermittlungsleitung (24) zu einer zweiten Steckdose (14) verbunden ist,
ein erster Eingang eines Multiplexers (120) mit der Übermittlungsleitung (22) zur ersten Steckdose (12) und ein zweiter Eingang des Multiplexers (120) mit der Übermittlungsleitung (24) zur zweiten Steckdose (14) verbunden ist,
ein Register (146) mit dem Ausgang des Multiplexers (120) verbunden ist,
und wobei eine Multiplexer-Adressiereinheit (140) abhängig von durch die Schwelllwerteinheiten (102, 104) detektierten Schwellwertüberschreitungen ein Selektionssignal auf Selektionsleitungen (142) erzeugt, die mit den Auswahleingängen des Multiplexers (120) verbunden sind.

13. Kommunikations- und/oder Steuerungssystem (10) nach Anspruch 12, dadurch **gekennzeichnet**, daß die Eingabeeinheit (34) eine Änderung des Registerinhalts des Registers (146) an die Steuereinheit (28, 36, 38) signalisiert, die den Registerinhalt auswertet.

14. Kommunikations- und/oder Steuerungssystem (10) nach einem der Ansprüche 11 bis 13, dadurch **gekennzeichnet**, daß die Steuereinheit (28) ein dem eingesteckten Gerät (54, 62, 92) zugeordnetes Statusregister enthält, in welchem mindestens einmal das Gerätkennzeichen (ID1 bis ID3, 200, 202) oder ein Teil davon gespeichert wird.

15. Kommunikations- und/oder Steuerungssystem (10) nach Anspruch 14, dadurch **gekennzeichnet**, daß das Statusregister auf ein Aktualisierungssignal hin aktualsiert wird, welches von der Eingabeeinheit (34) erzeugt wird.

16. Kommunikations- und/oder Steuerungssystem (10) nach einem der vorhergehenden Ansprüche 10 bis 15, dadurch **gekennzeichnet**, daß die Übermittlungsleitung (22 bis 26) mindestens eine optische Faser enthält.

17. Kommunikations- und/oder Steuerungssystem (10) nach einem der vorhergehenden Ansprüche 11 bis 16, dadurch **gekennzeichnet**, daß das Gerätkennzeichen (ID1 bis ID3, 200, 202) einen Typteil (214 bis 228) enthält, in welchem die Art des eingesteckten Geräts hinterlegt ist.

18. Kommunikations- und/oder Steuerungssystem (10) nach einem der vorhergehenden Ansprüche 11 bis 17, dadurch **gekennzeichnet**, daß das Gerätkennzeichen (ID1 bis ID3, 200, 202) einen Wartungsteil (230 bis 236) enthält, in welchem der Zustand des Geräts (54, 62, 92) verschlüsselt ist,
und/oder daß das Gerätkennzeichen (ID1 bis ID3, 200, 202) einen Teil (238 bis 244) zur Fehlerermittlung bei der Übermittlung des Gerätkennzeichens (ID1 bis ID3, 200, 202) enthält.

19. Kommunikations- und/oder Steuerungssystem (10) nach einem der vorhergehenden Ansprüche 11 bis 18, dadurch **gekennzeichnet**, daß das Gerätkennzeichen (ID1 bis ID3, 200, 202) einen Identifikationsteil (250 bis 257) enthält, in welchem eine Identifikation enthalten ist, welche das eingesteckte Gerät (54, 62, 92) nach Art eines Identifikationscodes eindeutig kennzeichnet.

20. Kommunikations- und/oder Steuerungssystem (10) nach Anspruch 19, dadurch **gekennzeichnet**, daß der Identifikationsteil (250 bis 257) nur dann im Gerätkennzeichen (ID1 bis ID3, 200, 202) enthalten ist, wenn ein Statusbit (212, 212') im Gerätkennzeichen (ID1 bis ID3, 200, 202) einen Wert hat, der anzeigt, daß der Identifikationsteil (250 bis 257) in diesem Gerätkennzeichen (ID1 bis ID3, 200, 202) enthalten ist.

21. Geräteadapter (52, 62, 87) für ein Kommunikations- und/oder Steuerungssystem (10) mit einem Stecker (56, 64, 88) für eine Steckdose (12 bis 16) zum Liefern einer standardisierten Versorgungsspannung, wobei an der Steckdose (12 bis 16) eine Übermittlungsleitung (22 bis 26) zum Übermitteln gerätespezifischer Daten angeordnet ist,
und mit mindestens einem Anschluß (60, 90) für ein Gerät (54, 92) oder mit einem in dem Geräteadapter (62) enthaltenen Gerät,
**gekennzeichnet** durch einen Gerätkennzeichenerzeuger, der ein Gerätkennzeichen (ID1 bis ID3, 200, 202) erzeugt, das zumindest die Art des Geräts (54, 92) kennzeichnet und das mindestens einmal über die Übermittlungsleitung (22 bis 26) übermittelt wird.

22. Geräteadapter (52, 62, 87) nach Anspruch 21, dadurch **gekennzeichnet**, daß der Geräteadapter (52, 62, 87) das Gerätkennzeichen (ID1 bis ID3, 200, 202) beim Einstecken des Steckers (56, 64, 88) in die Steckdose (12 bis 16) mindestens einmal selbsttätig sendet.
